# EUROPÄISCHE PATENTSCHRIFT

(11) **EP 3 490 852 B1**
(45) Veröffentlichungstag und Bekanntmachung des Hinweises auf die Patenterteilung: **01.09.2021**
(21) Anmeldenummer: 17742244.1
(22) Anmeldetag: 20.07.2017
(51) Int. Cl.: B60S 3/04

(54) **FAHRZEUGBEHANDLUNGSANLAGE UND VERFAHREN ZUM REINIGEN EINES FAHRZEUGS**
VEHICLE TREATMENT SYSTEM AND METHOD FOR CLEANING A VEHICLE
INSTALLATION DE TRAITEMENT D'UN VÉHICULE ET PROCÉDÉ DE NETTOYAGE D'UN VÉHICULE

(30) Priorität: 29.07.2016 DE 102016114016
(43) Veröffentlichungstag der Anmeldung: 05.06.2019
(73) Patentinhaber: WashTec Holding GmbH, 86153 Augsburg (DE)
(72) Erfinder: AUER, Robert, 86391 Stadtbergen (DE); GLEICH, Peter, 36341 Lauterbach (DE)
(74) Vertreter: Winter, Brandl - Partnerschaft mbB
(86) Internationale Anmeldenummer: PCT/EP2017/068342
(87) Internationale Veröffentlichungsnummer: WO 2018/019697

(56) Entgegenhaltungen:
- DE-A1-102007 017 615
- DE-A1-102014 107 056
- US-A1- 2004 206 778
- US-A1- 2011 192 433
- US-A1- 2015 122 297

## Beschreibung

Die vorliegende Anmeldung betrifft Fahrzeugbehandlungsanlagen zum Reinigen eines Fahrzeugs und ein Verfahren zum Reinigen eines Fahrzeugs unter Verwendung der Fahrzeugbehandlungsanlagen.

Für den Zweck der Reinigung von Fahrzeugen wie beispielsweise Kraftfahrzeugen sind im Stand der Technik verschiedene Verfahren, Anlagen und Reinigungsmittel bekannt. So offenbart beispielsweise die DE 10 2014 107056 A1 ein Verfahren zum Reinigen und Polieren eines Fahrzeugs, eine diesbezügliche Fahrzeugbehandlungsanlage sowie dafür geeignete Reinigungs- und Poliermittel.

Bei der Reinigung eines Kraftfahrzeugs werden üblicherweise mittels einer Auftragsvorrichtung kombinierte Mittel zur Reinigung und Pflege auf das zu reinigende Fahrzeug aufgebracht. So umfassen beispielsweise die in der DE 10 2014 107056 A1 offenbarten Formulierungen auf Wasserbasis als Bestandteile ein Wasch- und Reinigungssystem, das ein Reinigungs- und Dispergiersystem und einen Schaumbildner umfasst, einen oder mehrere als Glanzbildner und Lackpflege wirkende Stoffe, ein pH-einstellendes Mittel, das zudem eine Wasch- oder Pflegefunktion optimiert und/oder unterstützt, und optional einen Lösevermittler und Hilfsstoffe wie Konservierungsmittel, Duft- und Farbstoffe.

Bei der Fahrzeugreinigung mittels einer Fahrzeugbehandlungsanlage werden im Verlauf des Reinigungsvorgangs zudem üblicherweise verschiede Arten an Behandlungsflüssigkeiten zu unterschiedlichen Zwecken auf das zu reinigende Fahrzeug aufgebracht. So kann unterschieden werden zwischen Vorreinigern, die in der Vorwäsche eingesetzt werden, Bürstenshampoos, die in der Hauptwäsche eingesetzt werden, und Polishprodukten und Pflegeprodukten wie Schaumwachsen, die in abschließenden Polier- und Pflegeschritten eingesetzt werden. Ferner können in einer Fahrzeugbehandlungsanlage Behandlungsflüssigkeiten für spezielle Fahrzeugbereiche wie beispielsweise Felgenreiniger eingesetzt werden. Diese verschiedenen Arten an Behandlungsflüssigkeiten werden je nach vorgegebenem Waschprogramm eingesetzt, in der Regel zeitlich nacheinander. Diesbezüglich werden dem Benutzer einige verschieden Waschprogramme angeboten, die sich hinsichtlich der Art und Anzahl der verwendeten Behandlungsflüssigkeiten und in der Folge davon auch hinsichtlich des Preises unterscheiden.

Dokument US 2015 122 297 A1 offenbart eine Fahrzeugbehandlungsanlage zum Reinigen eines Fahrzeugs gemäß den Oberbegriffen der Ansprüche 1 und 3.

Um den Waschvorgang für den Kunden flexibler und attraktiver zu gestalten und um für den Betreiber einer Fahrzeugbehandlungsanlage eine verbesserte Kundenbindung und bessere wirtschaftliche Nutzung der Anlage zu ermöglichen, sind innovative Weiterentwicklungen und alternative Ausgestaltungen für eine Fahrzeugbehandlungsanlage und die Fahrzeugwäsche gesucht.

Aufgabe der vorliegenden Erfindung war es daher, eine weiterentwickelte Fahrzeugbehandlungsanlage zum Reinigen eines Fahrzeugs und ein attraktiveres Verfahren zum Reinigen eines Fahrzeugs unter Verwendung der Fahrzeugbehandlungsanlage bereitzustellen, mit denen dem Benutzer eine attraktivere Fahrzeugwäsche angeboten werden kann und mit denen der Betreiber der Fahrzeugbehandlungsanlage eine erhöhte Kundenbindung und eine verbesserte wirtschaftliche Nutzung der Fahrzeugbehandlungsanlage ermöglicht wird.

Gelöst wird die obige Aufgabe durch die Fahrzeugbehandlungsanlagen zum Reinigen eines Fahrzeugs gemäß Anspruch 1 und 3 und das Verfahren zum Reinigen eines Fahrzeugs gemäß Anspruch 8.

Die vorliegende Erfindung basiert auf dem Konzept einer Trennung von Ergebnis und Erlebnis bei der Fahrzeugreinigung und wird vorrichtungstechnisch dadurch realisiert, dass bei der erfindungsgemäßen Fahrzeugbehandlungsanlage durch eine entsprechend ausgestaltete Steuerung von Dosiereinrichtungen bei der Zubereitung der Behandlungsflüssigkeiten die Ergebniskomponenten getrennt von den Erlebniskomponenten zudosiert werden können. Mit der vorliegenden Erfindung kann somit dem Benutzer eine attraktivere Fahrzeugwäsche angeboten werden und kann der Betreiber der Fahrzeugbehandlungsanlage eine erhöhte Kundenbindung und eine verbesserte wirtschaftliche Nutzung der Fahrzeugbehandlungsanlage erzielen.

Bei den in der DE 10 2014 107056 A1 offenbarten kombinierten Mitteln, die vom Hersteller als entsprechende Formulierungen zubereitet und vertrieben werden, lassen sich die Bestandteile aufgrund ihrer Aufgabe in den Formulierungen unterteilen in Ergebniskomponenten, d.h. Komponenten die das Ergebnis der Fahrzeugreinigung bestimmen bzw. unterstützen, und Erlebniskomponenten, d.h. Komponenten die dem Benutzer der Fahrzeugbehandlungsanlage den Reinigungsvorgang attraktiver bzw. angenehmer gestalten sollen. Als die typischen Ergebniskomponenten können genannt werden Wasch- und Reinigungssysteme, als Glanzbildner und Lackpflege wirkende Stoffe sowie die sonstigen Bestandteile, die den Reinigungsprozess optimieren und/oder unterstützen. Typische Erlebniskomponenten sind insbesondere Schaumbildner und Duftstoffe. Schaumbildner werden üblicherweise dann zugesetzt, wenn die Schaumleistung der verwendeten Waschlauge gesteigert werden soll, um dadurch beim Benutzer der Fahrzeugbehandlungsanlage den Eindruck einer gesteigerten Reinigungsleistung zu erzeugen, selbst wenn die Reinigungsleistung bereits ausreichend ist. Duftstoffe werden im Wesentlichen zugesetzt, um die Fahrzeugwäsche für den Waschkunden angenehmer zu gestalten und dienen unter anderem dazu, unangenehme Gerüche zu überdecken.

Wie oben dargelegt wird mit den üblicherweise verwendeten kombinierten Mitteln zur Reinigung und Pflege eines Fahrzeugs eine breite Palette an Eigenschaften abgedeckt, so dass der Betreiber einer Fahrzeugbehandlungsanlage nur eine begrenzte Anzahl an verschiedenen kombinierten Mitteln bereitzuhalten braucht. In der Regel ist dies mindestens ein Produkt für jeden speziellen Anwendungsbereich bei der Fahrzeugwäsche wie Felgenwäsche, Vorwäsche, Schaumwäsche, Bürstenwäsche bzw. Hauptwäsche, Wachspflege, Trocknungshilfe und Polish.

Die Fahrzeugbehandlungsanlage zum Reinigen eines Fahrzeugs gemäß der vorliegenden Erfindung umfasst mindestens eine Behandlungseinrichtung mit der während der Fahrzeugreinigung eine Behandlungsflüssigkeit auf das zu reinigende Fahrzeug aufgebracht werden kann,
eine Fluidleitung und eine in der Fluidleitung angeordnete Pumpe zum Zuführen der Behandlungsflüssigkeit zu der mindestens einen Behandlungseinrichtung, eine erste Dosiereinrichtung und eine zweite Dosiereinrichtung, die jeweils stromaufwärts der Pumpe angeordnet sind, zum Zudosieren einer ersten und einer zweiten Komponente zu Wasser, um die Behandlungsflüssigkeit herzustellen, und
eine Steuereinheit zum Steuern der Fahrzeugbehandlungsanlage,
wobei
die erste Komponente einen oder mehrere Bestandteile enthält, welche die Reinigung des Fahrzeugs unterstützen, und die zweite Komponente mindestens einen Bestandteil enthält ausgewählt aus Mitteln zur Verbesserung der Schaumleistung der Behandlungsflüssigkeit und Duftstoffen und mittels der Steuereinheit die Zudosierung der ersten und der zweiten Komponente getrennt gesteuert werden kann und die Fahrzeugbehandlungsanlage eine Bedieneinheit umfasst, mit der die erste Komponente und die zweite Komponente ausgewählt werden können und die ermöglicht, gezielt lediglich die Dosierung der ersten Komponente zu erhöhen und gezielt lediglich die Dosierung der zweiten Komponente zu erhöhen.

Bei der erfindungsgemäßen Fahrzeugbehandlungsanlage werden die erste Komponente, d.h., die Ergebniskomponente(n), und die zweite Komponente, d.h., die Erlebniskomponente(n), getrennt zudosiert, um die Behandlungsflüssigkeit herzustellen.

Gemäß einer speziellen Ausführungsform sind die erste und die zweite Dosiereinrichtung so angeordnet, dass die erste und die zweite Komponente gleichzeitig oder nacheinander zudosiert werden können.

Eine alternative Fahrzeugbehandlungsanlage zum Reinigen eines Fahrzeugs gemäß der vorliegenden Erfindung, die auf demselben Konzept der Trennung von Ergebnis und Erlebnis basiert, umfasst
mindestens eine erste und eine zweite Behandlungseinrichtung mit der während der Fahrzeugreinigung eine erste und eine zweite Behandlungsflüssigkeit auf das zu reinigende Fahrzeug aufgebracht werden können,
erste und zweite Fluidleitungen und in den Fluidleitungen angeordnete erste und zweite Pumpen zum Zuführen der ersten und zweiten Behandlungsflüssigkeit zu der entsprechenden ersten und zweiten Behandlungseinrichtung,
eine erste Dosiereinrichtung, die stromaufwärts der ersten Pumpe angeordnet ist, zum Zudosieren einer ersten Komponente zu Wasser, um die erste Behandlungsflüssigkeit herzustellen,
eine zweite Dosiereinrichtung, die stromaufwärts der zweiten Pumpe angeordnet ist, zum Zudosieren einer zweiten Komponente zu Wasser, um die zweite Behandlungsflüssigkeit herzustellen, und
eine Steuereinheit zum Steuern der Fahrzeugbehandlungsanlage,
wobei
die erste Komponente einen oder mehrere Bestandteile enthält, welche die Reinigung des Fahrzeugs unterstützen, und die zweite Komponente mindestens einen Bestandteil enthält ausgewählt aus Mitteln zur Verbesserung der Schaumleistung der Behandlungsflüssigkeit und Duftstoffen und mittels der Steuereinheit die Zudosierung der ersten und der zweiten Komponente getrennt gesteuert werden kann und die Fahrzeugbehandlungsanlage eine Bedieneinheit umfasst, mit der die erste Komponente und die zweite Komponente ausgewählt werden können und die ermöglicht, gezielt lediglich die Dosierung der erste Komponente zu erhöhen und gezielt lediglich die Dosierung der zweiten Komponente zu erhöhen.

Bei dieser alternativen Ausführungsform der erfindungsgemäßen Fahrzeugbehandlungsanlage werden die Ergebniskomponenten und Erlebniskomponenten ebenfalls getrennt dosiert. Dabei werden allerdings zwei getrennte Behandlungsflüssigkeiten zubereitet und mittels getrennter Behandlungseinrichtungen auf das zu reinigende Fahrzeug aufgebracht.

Das erfindungsgemäße Verfahren zum Reinigen eines Fahrzeugs ist dadurch charakterisiert, dass es eine der erfindungsgemäßen Fahrzeugbehandlungsanlagen verwendet, wobei an der Steuereinheit die Zudosierungen der ersten und der zweiten Komponente getrennt eingestellt werden.

Die auf dem oben genannten Konzept basierende Erfindung bringt die Vorteile mit sich, dass flexibler auf die Erfordernisse bei der Fahrzeugreinigung eingegangen werden kann und eine möglichst sparsame Nutzung der Reinigungs- und Pflegemittel ermöglicht wird, so dass die Belastung des anfallenden Brauchwassers möglichst gering und die Fahrzeugreinigung kostengünstig ist.

Bei den üblichen Fahrzeugbehandlungsanlagen werden die verwendeten Mittel in einer vorgegebenen und normalerweise ausreichenden Mindestdosierung in der jeweiligen Behandlungsflüssigkeit verwendet. Falls die Reinigungsleistung in besonderen Fällen dennoch nicht ausreichend sein sollte, so wird die Dosierung entsprechend erhöht. Bei einer Erhöhung der Dosierung aufgrund einer unzureichenden Reinigungsleistung wird allerdings auch die Menge an eingesetzten Erlebniskomponenten erhöht, ohne dass dies ursächlich notwendig gewesen wäre. Gleichermaßen wäre bei dem Wunsch nach einem gesteigerten Erlebnis bei der Fahrzeugreinigung und der aus diesem Grund erhöhten Zudosierung des kombinierten Mittels auch die Menge an eingesetzten Ergebniskomponenten erhöht ohne dass dies notwendig gewesen wäre. Dies hat zur Folge, dass unnötigerweise der Verbrauch einzelner Komponenten gesteigert und die Belastung des entstehenden Brauchwassers erhöht wird.

Im Gegensatz dazu ist es bei der erfindungsgemäßen Fahrzeugbehandlungsanlagen zum Reinigen eines Fahrzeugs und dem erfindungsgemäßen Verfahren zum Reinigen eines Fahrzeugs im Fall einer unzureichenden Reinigungsleistung ausreichend, lediglich die Dosierung der Ergebniskomponenten zu erhöhen. Dabei wird der Anteil der Erlebniskomponenten in der Behandlungsflüssigkeit nicht erhöht und sowohl die Verbrauchskosten möglichst gering gehalten wie auch das anfallende Brauchwasser geringer belastet. Zudem hat sich gezeigt, dass nicht alle Benutzer einer Fahrzeugbehandlungsanlage Wert auf ein gesteigertes Erlebnis bei der Fahrzeugwäsche legen und daher auf den Zusatz von insbesondere Mitteln zur Erhöhung der Schaumleistung oder von Duftstoffen gänzlich verzichtet werden kann. Bei der erfindungsgemäßen Fahrzeugbehandlungsanlage und dem erfindungsgemäßen Verfahren kann dies durch eine entsprechende Steuerung mittels der Steuereinheit realisiert werden. Demgegenüber kann mit der vorliegenden Erfindung auch gezielt nur der Erlebnischarakter bei der Fahrzeugwäsche gesteigert werden, indem lediglich die Zudosierung der Erlebniskomponenten zu der Behandlungsflüssigkeit erhöht wird und somit ein höherer Verbrauch der Ergebniskomponenten, d.h. der Komponenten welche die Reinigung des Fahrzeugs unterstützen, vermieden wird.

Da in den erfindungsgemäßen Fahrzeugbehandlungsanlagen bei der Zubereitung der Behandlungsflüssigkeit die Ergebniskomponenten getrennt von den Erlebniskomponenten zudosiert werden, enthalten die verwendeten vorformulierten Mittel oder Konzentrate weniger Bestandteile was den Vorteil mit sich bringt, dass weniger Kompatibilitätsprobleme auftreten und die Entwicklungszeiten und notwendigen Tests in Bezug auf die Verträglichkeit der einzelnen Komponenten und die Stabilität der vorformulierten Mischungen verringert sind.

Ein weiterer Vorteil der erfindungsgemäßen Fahrzeugbehandlungsanlagen liegt darin, dass nach der Zubereitung der Behandlungsflüssigkeit die Erlebniskomponenten und Ergebniskomponenten nur für eine sehr kurze Zeit miteinander in Kontakt kommen und daher kaum Probleme hinsichtlich einer unzureichenden Kompatibilität oder Stabilität der eingesetzten Komponenten auftreten. Dies eröffnet vor allem bei der Duftauswahl ganz neue Möglichkeiten, da Duftöle in Reinigungsmitteln sehr oft geringe Stabilitäten aufweisen.

Bei den erfindungsgemäßen Fahrzeugbehandlungsanlagen sind vorzugsweise die erste Dosiereinrichtung über eine geeignete Zuleitung mit einem Vorratsbehälter für die erste Komponente und die zweite Dosiereinrichtung über eine geeignete Zuleitung mit einem Vorratsbehälter für die zweite Komponente verbunden. Die Zuleitungen können beispielsweise als Rohrleitungen oder Schläuche ausgebildet sein und falls notwendig geeignete Fördereinrichtungen wie Pumpen oder Förderschnecken umfassen.

Gemäß einer weiteren Ausführungsform kann die Steuereinheit zusätzlich eine Auswahl der Art der zweiten Komponente ermöglichen. So können beispielsweise verschiedene Düfte bereitgestellt und mittels der Steuereinheit ausgewählt werden. Zu diesem Zweck kann die zweite Dosiereinrichtung über geeignete Zuleitungen mit mehreren Vorratsbehältern für die unterschiedlichen Arten an zweiten Komponenten verbunden sein. Die Art und Menge an zweiten Komponenten können dabei über in den Zuleitungen enthaltenen Bauteilen zur Steuerung des Durchflusses wie Ventile gesteuert werden.

Die erfindungsgemäße Fahrzeugbehandlungsanlage verfügt über eine Bedieneinheit und gegebenenfalls zusätzlich über eine Anzeigeeinheit.

Mit der Bedieneinheit können die erste Komponente und die zweite Komponente ausgewählt werden. Vorzugsweise weist die Bedieneinheit hierzu mehrere Bedienelemente auf, wie beispielsweise Druckknöpfe oder Schalter, mit denen die Erlebniskomponenten und Ergebniskomponenten getrennt aus einer vorgegebenen Anzahl verschiedener Erlebniskomponenten und Ergebniskomponenten ausgewählt und somit dem Wasser zur Herstellung der Waschlauge zudosiert werden können.

Die Bedieneinheit kann zudem derart ausgestaltet sein, dass eine Bezahlung (mittels Münzen, Jetons, Transponderwaschkarten oder Codes) vorgenommen werden kann. Zu diesem Zweck können eine numerische Tastatur zum Eingeben von Nummerncodes und/oder ein Transponderfeld zum Bezahlen mittels einer Transponderwaschkarte vorgesehen sein.

Die Anzeigeeinheit weist ein Anzeigeelement auf, wie beispielsweise ein Display, auf dem alle für die Nutzung der Fahrzeugbehandlungsanlage relevanten Informationen dargestellt sind. Dies können beispielsweise die auswählbaren Erlebniskomponenten und Ergebniskomponenten und gegebenenfalls Waschprogramme mit vorkonfigurierten Zusammensetzungen der Behandlungsflüssigkeit bzw. Waschlauge sein. Zusätzlich können Angaben zu den Preisen der einzelnen Komponenten und Waschprogramme dargestellt sein.

Die Anzeigeeinheit und Bedieneinheit sind über elektrische Leitungen mit der Steuereinheit verbunden, so dass die vom Benutzer getätigten Bedieneingaben an die Steuereinheit übertragen und die von der Steuereinheit ausgegebenen Informationen auf der Anzeigeeinheit dargestellt werden können.

Die Anzeigeeinheit und Bedieneinheit können vorzugsweise auch als eine kombinierte Anzeige/Bedieneinheit ausgestaltet sein, wie beispielsweise in der Form eines Touchpanels oder Touchscreens.

Indem die erfindungsgemäße Fahrzeugbehandlungsanlage mit der oben genannten Bedieneinheit und gegebenenfalls mit einer Anzeigeeinheit ausgestattet ist, kann dem Benutzer eine attraktivere Fahrzeugwäsche angeboten werden. Dies bedingt eine verbesserte Kundenbindung, so dass der Betreiber eine verbesserte wirtschaftliche Nutzung der Fahrzeugbehandlungsanlage realisieren kann.

Wie bereits eingangs dargelegt, werden bei der Fahrzeugreinigung mittels einer Fahrzeugbehandlungsanlage im Verlauf des Reinigungsvorgangs üblicherweise verschiede Arten an Behandlungsflüssigkeiten zu unterschiedlichen Zwecken auf das zu reinigende Fahrzeug aufgebracht, wobei unterschieden werden kann zwischen Vorreinigern, die in der Vorwäsche eingesetzt werden, Bürstenshampoos, die in der Hauptwäsche eingesetzt werden, und Polishprodukten und Pflegeprodukten wie Schaumwachsen, die in abschließenden Polier- und Pflegeschritten eingesetzt werden. Zudem können Behandlungsflüssigkeiten für spezielle Fahrzeugbereiche wie beispielsweise Felgenreiniger in einer Fahrzeugbehandlungsanlage eingesetzt werden. Unabhängig davon, welche Art an Behandlungsflüssigkeit mit der erfindungsgemäßen Fahrzeugbehandlungsanlage und dem erfindungsgemäßen Verfahren aufgebracht wird, kann mittels der Steuereinheit die Zudosierung einer Erlebniskomponente gesteuert werden. Dies bringt den Vorteil mit sich, dass damit eine Vielzahl an Kombinationsmöglichkeiten bereitgestellt werden kann ohne dass dafür jeweils ein kombiniertes Mittel entwickelt, hergestellt und vom Betreiber bereitgehalten werden muss.

Die in den erfindungsgemäßen Fahrzeugbehandlungsanlagen verwendeten Pumpen zum Zuführen der Behandlungsflüssigkeit zu einer Behandlungseinrichtung sind vorzugsweise Druckerhöhungspumpen, insbesondere auch Hochdruckpumpen. Im Fall der Verwendung einer Hochdruckpumpe kann dieser eine Vordruckpumpe vorgeschalten sein und werden in diesem Fall die ersten und zweiten Komponenten stromaufwärts der Vordruckpumpe zudosiert.

Die bei der erfindungsgemäßen Fahrzeugbehandlungsanlage und dem erfindungsgemäßen Verfahren zum Reinigen eines Fahrzeugs eingesetzte Ergebniskomponente enthält vorzugsweise einen oder mehrere Bestandteile ausgewählt aus Laugen oder Säuren, z.B. Natronlauge oder Salzsäure, Aminen, z.B. Triethanolamin, Komplexbildnern, z.B. Nitrilotriacetat, Phosphate und Phosphonate, Dispergatoren, z.B. Natriumpolyacrylat, Lösungsmitteln, z.B. Butyldiglykol, starken Netzmitteln, z.B. Fettalkoholethoxylate, Emulgatoren, z.B. quartäre Ammoniumverbindungen, hydrophoben Komponenten, z.B. Silikonöle, Esteröle und Mineralöle.

Die eingesetzte Erlebniskomponente enthält vorzugsweise einen oder mehrere Bestandteile ausgewählt aus Duftölen, Farbstoffen, stark schäumenden anionischen, amphoteren oder nichtionischen Tensiden wie beispielsweise Ethersulfate, Olefinsulfonate, Zuckertenside oder Betaine und Aminoxide.

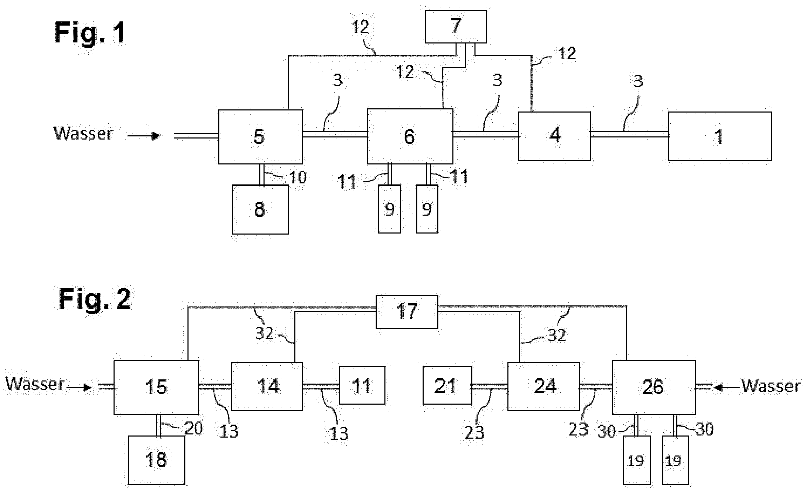

Nachfolgend werde unter Bezug auf die Figuren 1 und 2 beispielhafte Ausführungsformen der erfindungsgemäßen Fahrzeugbehandlungsanlage zum Reinigen eines Fahrzeugs erläutert, wobei
Fig. 1 eine schematische Darstellung einer ersten Ausführungsform einer Fahrzeugbehandlungsanlage gemäß der vorliegenden Erfindung ist, und
Fig. 2 eine schematische Darstellung einer zweiten Ausführungsform einer Fahrzeugbehandlungsanlage gemäß der vorliegenden Erfindung ist.

Fig. 1 zeigt schematisch den Aufbau einer beispielhaften Fahrzeugbehandlungsanlage als eine erste Ausführungsform der vorliegenden Erfindung. Die Fahrzeugbehandlungsanlage weist eine Behandlungseinrichtung 1 auf mit der währende der Reinigung eines Fahrzeug, wie eines Kraftfahrzeugs, eine Behandlungsflüssigkeit auf das zu reinigende Fahrzeug aufgebracht werden kann. Die Behandlungsflüssigkeit kann beispielsweise eine Waschlauge und die Behandlungseinrichtung eine Hochdrucklanze sein. Der Behandlungseinrichtung 1 wird über eine Fluidleitung 3 und einer in der Fluidleitung 3 angeordneten Hochdruckpumpe 4 die Behandlungsflüssigkeit zugeführt. Stromaufwärts der Hochdruckpumpe 4 sind eine ersten Dosiereinrichtung 5 und eine zweite ersten Dosiereinrichtung 6 angeordnet, mit denen zum Zweck der Zubereitung der Behandlungsflüssigkeit die verschiedenen Bestandteile dem Wasser zudosiert werden können.

Bei der erfindungsgemäßen Fahrzeugbehandlungsanlage sind die Bestandteile unterteilt in eine erste und eine zweite Komponente, wobei die erste Komponente einen oder mehrere Bestandteile enthält, welche die Reinigung des Fahrzeugs unterstützen, und die zweite Komponente mindestens einen Bestandteil enthält ausgewählt aus Mitteln zur Verbesserung der Schaumleistung der Behandlungsflüssigkeit und Duftstoffen.

In der in Fig. 1 dargestellten Fahrzeugbehandlungsanlage werden dem Wasser zuerst die erste Komponente und danach die zweite Komponente zudosiert. In einer alternativen Ausführungsform kann zuerst die zweite Komponente und danach die erste Komponente zudosiert werden.

Die ersten und zweiten Komponenten werden in geeigneten Vorratsbehältern 8 bzw. 9 vorgehalten, die über geeignete Fluidverbindungen 10 bzw. 11, wie Rohrleitungen oder Schläuche, mit den Dosiereinrichtungen verbunden sind. Bei der Fahrzeugbehandlungsanlage der Fig.1 kann die Dosierung einer ersten Komponente und die Dosierung von zwei verschiedenen zweiten Komponenten getrennt gesteuert werden. Die erste Komponente, die im Vorratsbehälter 8 gelagert wird, ist eine Ergebniskomponente welche die Reinigung des Fahrzeugs unterstützt und enthält waschaktive Substanzen. Die beiden zweiten Komponenten sind Erlebniskomponenten wie beispielsweise ein Mitteln zur Verbesserung der Schaumleistung der Behandlungsflüssigkeit und ein Duftstoff und werden in den Vorratsbehältern 9 gelagert.

Die erste und zweite Dosiereinrichtung und die Hochdruckpumpe stehen über Steuerleitungen 12 in Verbindung mit der Steuereinheit 7 mittels der die Zudosierung der ersten und der zweiten Komponente getrennt gesteuert werden kann. Somit kann bei jeder Fahrzeugwäsche vorgegeben werden, ob keine, eine oder beide der Erlebniskomponenten der Behandlungsflüssigkeit zudosiert werden soll. Zudem kann durch Erhöhen der Dosierung der ersten Komponente selektiv die Reinigungsleistung erhöht werden, ohne gleichzeitig auch die Dosierung der Erlebniskomponenten zu erhöhen, wodurch die eingesetzten Komponenten effizienter eingesetzt werden und das Brauchwasser geringer belastet wird.

Die oben genannte Vorgabe der Zudosierung der Erlebniskomponente(n) kann realisiert werden mittels einer Bedieneinheit (in Fig. 1 nicht gezeigt), die über geeignete Bedienelemente, wie beispielsweise Druckknöpfe oder Schalter, verfügt, mit denen die Erlebniskomponenten ausgewählt werden können. Zudem kann die Fahrzeugbehandlungsanlage zusätzlich eine Anzeigeeinheit (in Fig. 1 nicht gezeigt) aufweisen, die ein Anzeigeelement mit beispielsweise einem Display aufweist, auf dem alle für die Nutzung der Fahrzeugbehandlungsanlage relevanten Informationen dargestellt sind. Die Anzeigeeinheit und Bedieneinheit sind über elektrische Leitungen mit der Steuereinheit verbunden.

Fig. 2 zeigt schematisch den Aufbau einer beispielhaften Fahrzeugbehandlungsanlage als eine zweite Ausführungsform der vorliegenden Erfindung. Die Fahrzeugbehandlungsanlage weist eine erste Behandlungseinrichtung 11 und eine zweite Behandlungseinrichtung 21 auf mit denen dem zu reinigenden Fahrzeug eine erste und eine zweite Behandlungsflüssigkeit zugeführt werden können. Über erste und zweite Fluidleitungen 13 bzw. 23 und in den Fluidleitungen angeordneten ersten und zweiten Pumpen 14 bzw. 24 werden den Behandlungseinrichtungen die jeweiligen Behandlungsflüssigkeiten zugeführt.

Stromaufwärts der ersten Pumpe 14 ist eine erste Dosiereinrichtung 15 angeordnet zum Zudosieren einer ersten Komponente zu Wasser, um die erste Behandlungsflüssigkeit herzustellen. Stromaufwärts der zweiten Pumpe 24 ist eine zweite Dosiereinrichtung 26 angeordnet zum Zudosieren einer zweiten Komponente zu Wasser, um die erste Behandlungsflüssigkeit herzustellen. Wie in der in Fig. 1 dargestellten Fahrzeugbehandlungsanlage gemäß der ersten Ausführungsform sind die erste und zweite Dosiereinrichtung über geeignete Fluidverbindungen 20 bzw. 30 mit Vorratsbehältern 18 bzw. 19 verbunden in denen die ersten bzw. zweiten Komponenten vorgehalten werden.

Zudem stehen die ersten und zweiten Dosiereinrichtungen und die ersten und zweiten Hochdruckpumpen über Steuerleitungen 32 in Verbindung mit der Steuereinheit 17 mittels der die Zudosierung der ersten und der zweiten Komponente getrennt gesteuert werden kann.

Zusätzlich zu den Vorteilen, die bereits bei der ersten Ausführungsform genannt wurden, bietet die Fahrzeugbehandlungsanlage gemäß der zweiten Ausführungsform die Möglichkeit der getrennten Aufbringung von Ergebniskomponenten und Erlebniskomponenten auf das zu reinigende Fahrzeug. Dies bietet insbesondere bei Portalwaschanlagen, bei denen ein Waschportal sich mehrmals entlang des zu reinigenden Fahrzeugs bewegt, den Vorteil, dass bestehende Anlagen einfach nachgerüstet werden können.

In der Fahrzeugbehandlungsanlage gemäß der zweiten Ausführungsform sind die beiden Pumpen 14 und 24 als Hochdruckpumpen ausgeführt. Je nach den Anforderungen bei der Fahrzeugreinigung kann alternativ nur eine dieser beiden Pumpen eine Hochdruckpumpe sein und die andere arbeitet bei niedrigeren Drücken.

Die Fahrzeugbehandlungsanlage der Fig. 2 kann auch eine wie bei der Fahrzeugbehandlungsanlage der Fig.1 beschriebene Bedieneinheit und gegebenenfalls zusätzliche Anzeigeeinheit aufweisen.

## Patentansprüche

1. Fahrzeugbehandlungsanlage zum Reinigen eines Fahrzeugs mit
mindestens einer Behandlungseinrichtung (1) mit der währende der Fahrzeugreinigung eine Behandlungsflüssigkeit auf das zu reinigende Fahrzeug aufgebracht werden kann,
einer Fluidleitung (3) zum Zuführen der Behandlungsflüssigkeit zu der mindestens einen Behandlungseinrichtung (1) und
einer ersten Dosiereinrichtung (5) und einer zweiten Dosiereinrichtung (6) zum Zudosieren einer ersten und einer zweiten Komponente zu Wasser, um die Behandlungsflüssigkeit herzustellen,
**dadurch gekennzeichnet, dass**
in der Fluidleitung (3) eine Pumpe (4) angeordnet ist und die erste Dosiereinrichtung (5) und die zweite Dosiereinrichtung (6) jeweils stromaufwärts der Pumpe (4) angeordnet sind,
die erste Komponente einen oder mehrere Bestandteile enthält, welche die Reinigung des Fahrzeugs unterstützen, und die zweite Komponente mindestens einen Bestandteil enthält ausgewählt aus Mitteln zur Verbesserung der Schaumleistung der Behandlungsflüssigkeit und Duftstoffen,
die Fahrzeugbehandlungsanlage eine Steuereinheit (7) zum Steuern der Fahrzeugbehandlungsanlage umfasst mittels der die Zudosierung der ersten und der zweiten Komponente getrennt gesteuert werden kann und
die Fahrzeugbehandlungsanlage eine Bedieneinheit umfasst, mit der die erste Komponente und die zweite Komponente ausgewählt werden können und die ermöglicht, gezielt lediglich die Dosierung der ersten Komponente zu erhöhen und gezielt lediglich die Dosierung der zweiten Komponente zu erhöhen.

2. Fahrzeugbehandlungsanlage nach Anspruch 1, wobei die erste und die zweite Dosiereinrichtung (5, 6) so angeordnet sind, dass die erste und die zweite Komponente gleichzeitig oder nacheinander zudosiert werden können.

3. Fahrzeugbehandlungsanlage zum Reinigen eines Fahrzeugs mit
mindestens einer ersten Behandlungseinrichtung (11) und einer zweiten Behandlungseinrichtung (21) mit der währende der Fahrzeugreinigung eine erste und einer zweite Behandlungsflüssigkeit auf das zu reinigende Fahrzeug aufgebracht werden,
ersten und zweiten Fluidleitungen (13, 23) zum Zuführen der ersten und zweiten Behandlungsflüssigkeit zu der entsprechenden ersten und zweiten Behandlungseinrichtung (11, 21),
einer ersten Dosiereinrichtung (15) zum Zudosieren einer ersten Komponente zu Wasser, um die erste Behandlungsflüssigkeit herzustellen und
einer zweiten Dosiereinrichtung (26) zum Zudosieren einer zweiten Komponente zu Wasser, um die zweite Behandlungsflüssigkeit herzustellen,
**dadurch gekennzeichnet, dass**
in den ersten und zweiten Fluidleitungen (13, 23) erste und zweite Pumpen (14, 24) angeordnet sind und die erste Dosiereinrichtung (15) stromaufwärts der ersten Pumpe (14) angeordnet ist und die zweite Dosiereinrichtung (26) stromaufwärts der zweiten Pumpe (24) angeordnet ist,
die erste Komponente einen oder mehrere Bestandteile enthält, welche die Reinigung des Fahrzeugs unterstützen, und die zweite Komponente mindestens einen Bestandteil enthält ausgewählt aus Mitteln zur Verbesserung der Schaumleistung der Behandlungsflüssigkeit und Duftstoffen,
die Fahrzeugbehandlungsanlage eine Steuereinheit (17) zum Steuern der Fahrzeugbehandlungsanlage umfasst mittels der die Zudosierung der ersten und der zweiten Komponente getrennt gesteuert werden kann und
die Fahrzeugbehandlungsanlage eine Bedieneinheit umfasst, mit der die erste Komponente und die zweite Komponente ausgewählt werden können, und die ermöglicht, gezielt lediglich die Dosierung der ersten Komponente zu erhöhen und gezielt lediglich die Dosierung der zweiten Komponente zu erhöhen.

4. Fahrzeugbehandlungsanlage nach einem der vorhergehenden Ansprüche, wobei die erste Dosiereinrichtung (5, 15) über eine geeignete Zuleitung (10, 20) mit einem Vorratsbehälter (8, 18) für die erste Komponente verbunden ist und die zweite Dosiereinrichtung (6, 26) über eine geeignete Zuleitung (11, 30) mit einem Vorratsbehälter (9, 19) für die zweite Komponente verbunden ist.

5. Fahrzeugbehandlungsanlage nach einem der vorhergehenden Ansprüche, wobei die Steuereinheit (7, 17) zusätzlich eine Auswahl der Art der zweiten Komponente ermöglicht und die zweite Dosiereinrichtung (6, 26) über geeignete Zuleitungen (11, 30) mit mehreren Vorratsbehältern (9, 19) für unterschiedliche Arten an zweiten Komponenten verbunden ist.

6. Fahrzeugbehandlungsanlage nach einem der vorhergehenden Ansprüche, wobei die erste Komponente einen oder mehrere Bestandteile enthält ausgewählt aus Laugen oder Säuren, Aminen, Komplexbildnern, Dispergatoren, Lösungsmitteln, Netzmitteln, Emulgatoren und hydrophoben Komponenten.

7. Fahrzeugbehandlungsanlage nach einem der vorhergehenden Ansprüche, wobei die zweite Komponente einen oder mehrere Bestandteile enthält ausgewählt aus Duftölen, Farbstoffen und stark schäumenden anionischen, amphoteren oder nichtionischen Tensiden.

8. Verfahren zum Reinigen eines Fahrzeugs unter Verwendung der Fahrzeugbehandlungsanlage gemäß einem der Ansprüche 1 bis 7, wobei an der Bedieneinheit die erste Komponente und die zweite Komponente ausgewählt und an der Steuereinheit (7, 17) die Zudosierungen der ersten und der zweiten Komponente getrennt eingestellt werden.

## Claims

1. A vehicle treatment system for cleaning a vehicle comprising
at least one treatment device (1) with which a treatment fluid can be applied to the vehicle to be cleaned during vehicle cleaning,
a fluid line (3) for supplying the treatment fluid to the at least one treatment device (1) and
a first dosing device (5) and a second dosing device (6) for additional dosing of a first and a second component to water in order to produce the treatment fluid, **characterized in that**
a pump (4) is arranged in the fluid line (3) and the first dosing device (5) and the second dosing device (6) are arranged respectively upstream of the pump (4), the first component contains one or more constituents which assist cleaning of the vehicle, and the second component contains at least one constituent selected from agents for improving the foaming performance of the treatment fluid and aromatic substances,
the vehicle treatment system comprises a control unit (7) for controlling the vehicle treatment system via which the additional dosing of the first and the second component can be controlled separately, and
the vehicle treatment system comprises an operating unit via which the first component and the second component can be selected and which makes it possible to specifically increase only the dosing of the first component and to specifically increase only the dosing of the second component.

2. The vehicle treatment system of claim 1, wherein the first and the second dosing devices (5, 6) are arranged such that the first and the second components can be additionally dosed simultaneously or sequentially.

3. A vehicle treatment system for cleaning a vehicle comprising
at least a first treatment device (11) and a second treatment device (21) with which a first and a second treatment fluid are applied to the vehicle to be cleaned during the vehicle cleaning,
first and second fluid lines (13, 23) for supplying the first and second treatment fluids to the respective first and second treatment devices (11, 21),
a first dosing device (15) for additional dosing a first component to water in order to produce the first treatment fluid, and
a second dosing device (26) for additional dosing of a second component to water in order to produce the second treatment fluid,
**characterized in that**
first and second pumps (14, 24) are arranged in the first and second fluid lines (13, 23) and the first dosing device (15) is arranged upstream of the first pump (14) and the second dosing device (26) is arranged upstream of the second pump (24),
the first component contains one or more constituents which assist cleaning of the vehicle, and the second component contains at least one constituent selected from agents for improving the foaming performance of the treatment fluid and aromatic substances,
the vehicle treatment system comprises a control unit (7) for controlling the vehicle treatment system via which the additional dosing of the first and the second component can be controlled separately, and
the vehicle treatment system comprises an operating unit via which the first component and the second component can be selected and which makes it possible to specifically increase only the dosing of the first component and to specifically increase only the dosing of the second component.

4. The vehicle treatment system according to one of the preceding claims, wherein the first dosing device (5, 15) is connected via a suitable supply line (10, 20) to a reservoir (8, 18) for the first component, and the second dosing device (6, 26) is connected via a suitable supply line (11, 30) to a reservoir (9, 19) for the second component.

5. The vehicle treatment system according to one of the preceding claims, wherein the control unit (7, 17) additionally allows selection of the type of the second component and the second dosing device (6, 26) is connected via suitable supply lines (11, 30) to several reservoirs (9, 19) for different types of second components.

6. The vehicle treatment system according to one of the preceding claims, wherein the first component contains one or more constituents selected from bases or acids, amines, complexing agents, dispersants, solvents, wetting agents, emulsifiers and hydrophobic components.

7. The vehicle treatment system according to one of the preceding claims, wherein the second component contains one or more constituents selected from fragrance oils, dyes and high foaming, anionic, amphoteric or nonionic surfactants.

8. A method for cleaning a vehicle using the vehicle treatment system according to one of claims 1 to 7, wherein the first component and the second component are selected at the operating unit and the additional dosing of the first and the second component are set separately at the control unit (7, 17).

## Revendications

1. Installation de traitement de véhicule pour le nettoyage d'un véhicule avec
au moins un dispositif de traitement (1), avec lequel pendant le nettoyage du véhicule un liquide de traitement peut être appliqué sur le véhicule à nettoyer,
une conduite de fluide (3) pour la fourniture du liquide de traitement à l'au moins un dispositif de traitement (1) et
un premier dispositif de dosage (5) et un second dispositif de dosage (6) pour le dosage d'un premier et d'un second composant pour former de l'eau afin de fabriquer le liquide de traitement,
**caractérisée en ce que**
une pompe (4) est agencée dans la conduite de fluide (3) et le premier dispositif de dosage (5) et le second dispositif de dosage (6) sont agencés respectivement en amont de la pompe (4),
le premier composant contient un ou plusieurs constituants qui soutiennent le nettoyage du véhicule, et le second composant contient au moins un constituant sélectionné parmi des moyens pour l'amélioration de la puissance de moussage du liquide de traitement et des parfums,
l'installation de traitement de véhicule comporte une unité de commande (7) pour la commande de l'installation de traitement de véhicule, au moyen de laquelle le dosage du premier et du second composant peut être commandé séparément et
l'installation de traitement de véhicule comporte une unité de manipulation, avec laquelle le premier composant et le second composant peuvent être sélectionnés et qui permet d'augmenter de manière ciblée juste le dosage du premier composant et d'augmenter de manière ciblée juste le dosage du second composant.

2. Installation de traitement de véhicule selon la revendication 1, dans laquelle le premier et le second dispositif de dosage (5, 6) sont agencés de sorte que le premier et le second composant puissant être dosés simultanément ou l'un après l'autre.

3. Installation de traitement de véhicule pour le nettoyage d'un véhicule avec
au moins un premier dispositif de traitement (11) et un second dispositif de traitement (21), avec lequel pendant le nettoyage du véhicule un premier et un second liquide de traitement sont appliqués sur le véhicule à nettoyer,
des premier et second conduites de fluide (13, 23) pour la fourniture du premier et second liquide de traitement aux premier et second dispositifs de traitement (11, 21) correspondants,
un premier dispositif de dosage (15) pour le dosage d'un premier composant pour former de l'eau afin de fabriquer le premier liquide de traitement et
un second dispositif de dosage (26) pour le dosage d'un second composant pour former de l'eau afin de fabriquer le second liquide de traitement,
**caractérisée en ce que**
des première et seconde pompes (14, 24) sont agencées dans les première et seconde conduites de fluide (13, 23) et le premier dispositif de dosage (15) est agencé en amont de la première pompe (14) et le second dispositif de dosage (26) est agencé en amont de la seconde pompe (24),
le premier composant contient un ou plusieurs constituants qui soutiennent le nettoyage du véhicule, et le second composant contient au moins un constituant sélectionné parmi des moyens pour l'amélioration de la puissance de moussage du liquide de traitement et des parfums,
l'installation de traitement de véhicule comporte une unité de commande (17) pour la commande de l'installation de traitement de véhicule, au moyen de laquelle le dosage du premier et du second composant peut être commandé séparément et
l'installation de traitement de véhicule comporte une unité de manipulation, avec laquelle le premier composant et le second composant peuvent être sélectionnés, et qui permet d'augmenter de manière ciblée juste le dosage du premier composant et d'augmenter de manière ciblée juste le dosage du second composant.

4. Installation de traitement de véhicule selon l'une des revendications précédentes, dans laquelle le premier dispositif de dosage (5, 15) est relié par le biais d'une conduite d'amenée (10, 20) appropriée à un réservoir (8, 18) pour le premier composant et le second dispositif de dosage (6, 26) est relié par le biais d'une conduite d'amenée (11, 30) appropriée à un réservoir (9, 19) pour le second composant.

5. Installation de traitement de véhicule selon l'une des revendications précédentes, dans laquelle l'unité de commande (7, 17) permet en outre une sélection du type du second composant et le second dispositif de dosage (6, 26) est relié par le biais de conduites d'amenée (11, 30) appropriées à plusieurs réservoirs (9, 19) pour différents types de seconds composants.

6. Installation de traitement de véhicule selon l'une des revendications précédentes, dans laquelle le premier composant contient un ou plusieurs constituants sélectionnés parmi des lessives alcalines ou des acides, des amines, des agents complexants, des agents dispersants, des solvants, des agents mouillants, des émulateurs et des composants hydrophobes.

7. Installation de traitement de véhicule selon l'une des revendications précédentes, dans laquelle le second composant contient un ou plusieurs constituants sélectionnés parmi des huiles odoriférante, des colorants et des agents tensio-actifs anioniques, amphotères ou non ioniques fortement moussants.

8. Procédé de nettoyage d'un véhicule en utilisant l'installation de traitement de véhicule selon l'une des revendications 1 à 7, dans lequel le premier composant et le second composant sont sélectionnés au niveau de l'unité de manipulation et les dosages du premier et du second composant sont réglés séparément au niveau de l'unité de commande (7, 17).
